# FASCICULE DE BREVET EUROPEEN

(11) **EP 2 265 156 B1**
(45) Date de publication et mention de la délivrance du brevet: **15.05.2013**
(21) Numéro de dépôt: 09718825.4
(22) Date de dépôt: 13.03.2009
(51) Int. Cl.: A47J 31/36

(54) **APPAREIL ET CAPSULE POUR LA PREPARATION D'UNE BOISSON**
VORRICHTUNG UND KAPSEL ZUR GETRÄNKEZUBEREITUNG
APPARATUS AND CAPSULE FOR MAKING A DRINK

(30) Priorité: 14.03.2008 EP 08004876
(43) Date de publication de la demande: 29.12.2010
(60) Demande divisionnaire: 13158706.5
(73) Titulaire: Mocoffee AG, 8008 Zürich (CH)
(72) Inventeur: FAVRE, Eric, CH-1041 St-barthélemy (CH)
(74) Mandataire: reuteler & cie SA
(86) Numéro de dépôt international: PCT/IB2009/051047
(87) Numéro de publication internationale: WO 2009/113035

(56) Documents cités:
- EP-A- 1 444 932
- EP-A- 1 541 070
- EP-A- 1 767 129
- WO-A-2007/031378
- WO-A-2007/045553
- US-A1- 2003 071 056

## Description

La présente invention concerne un appareil et une capsule pour la préparation d'une boisson par injection d'eau chaude sous pression dans la capsule.

Des appareils pour la préparation de boissons par l'injection d'eau chaude à travers une capsule contenant une substance à extraire, telle que du café, sont connues et décrites par exemple dans les publications EP1646304, EP1646305, WO2007016977. Dans EP1646305, la capsule est introduite dans l'appareil en orientant la capsule de sorte à ce que les faces d'injection et d'extraction se trouvent dans un plan essentiellement vertical. La capsule est retenue dans une position intermédiaire et ensuite déplacée de la position intermédiaire à sa position finale dans le porte-capsule quand le mécanisme de fermeture pour l'injection est activé.

Dans le dispositif selon la publication WO2007016977, la capsule est introduite directement dans un porte-capsule dans une première position, le porte-capsule étant ensuite pivoté dans une deuxième position d'injection et après l'injection pivoté encore dans une troisième position pour l'éjection de la capsule. Un désavantage de ce système antérieur résulte des mouvements multiples du porte-capsule, la complexité des pièces mécaniques pouvant diminuer la fiabilité de l'appareil et augmenter son coût. Par ailleurs, il est plus difficile d'assurer une parfaite étanchéité de la tête d'injection contre le porte-capsule, autour de la capsule, tenant compte des pressions élevées (6 à 12 bars).

Le but de l'invention est de fournir un appareil pour la préparation de boissons à partir de capsules par injection d'eau chaude sous pression, qui est fiable et économe.

Il est avantageux de fournir un appareil pour la préparation de boissons à partir de capsules qui est facile à utiliser.

Il est avantageux de fournir un appareil pour la préparation de boissons à partir de capsules qui est ergonomique.

Il est avantageux de fournir un appareil pour la préparation de boissons à partir de capsules permettant l'extraction de boissons à haute pression de manière fiable.

Des buts de l'invention sont réalisés par l'appareil pour la préparation de boissons à partir de capsules par injection d'eau chaude sous pression selon la revendication 1.

Dans la présente sont décrits un appareil et une capsule pour la préparation d'une boisson ou d'un aliment comme défini dans la revendication 1.

La paroi latérale de l'enveloppe de la capsule a une forme évasée tronquée, l'angle de conicité dans une forme d'exécution étant entre 0° et 10°. Dans une forme d'exécution, la capsule remplie d'une substance pour la préparation d'une boisson, a une répartition de poids telle que le centre de gravité G est situé dans la partie inférieure de la capsule, à savoir entre la ligne à mi-hauteur et le fond. Cela permet d'améliorer l'orientation de la capsule lorsqu'elle tombe dans le logement afin d'assurer qu'elle tombe de manière fiable. Le centre de gravité peut être abaissé en variant l'épaisseur et la forme de l'enveloppe de la capsule, par exemple en ayant un ajout de matière sur la paroi de fond de la capsule. Le fond de la capsule peut être plus épais que les parois latérales de la capsule.

Dans une forme d'exécution, le centre de gravité est abaissé en ne remplissant que partiellement l'enveloppe de la capsule d'une substance pour la préparation d'une boisson, à un niveau inférieur à 95%, de préférence inférieure à 90% du volume total de l'intérieur de la capsule.

Avantageusement l'angle du canal d'introduction permet l'introduction de la capsule jusqu'à sa position finale dans le porte-capsule et permet aussi l'éjection facile de la capsule dans une configuration compacte et économe. Le canal d'introduction est incliné de préférence à un angle entre 40 et 60 degrés par rapport au plan horizontal. L'angle du canal d'introduction conjugué avec l'inclinaison de la portion de paroi latérale du logement de la capsule et la forme de la capsule permet d'assurer l'arrêt de la capsule sans mécanisme supplémentaire.

Le bloc d'extraction comprend un orifice d'éjection de la capsule qui peut avantageusement être orienté à un angle latéral β entre 20 et 60 degrés, par rapport à un plan vertical (PV) traversant un axe (IN) du canal d'introduction. De préférence, l'angle latéral β est entre 30 et 50 degrés.

D'autres buts et aspects avantageux de l'invention ressortiront des revendications, de la description détaillée et des dessins annexés dans lesquels :

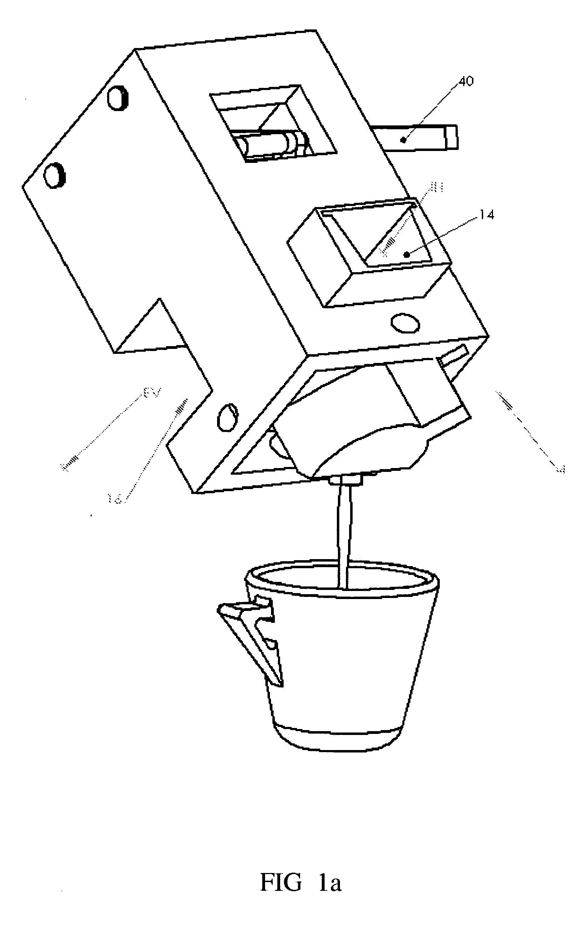

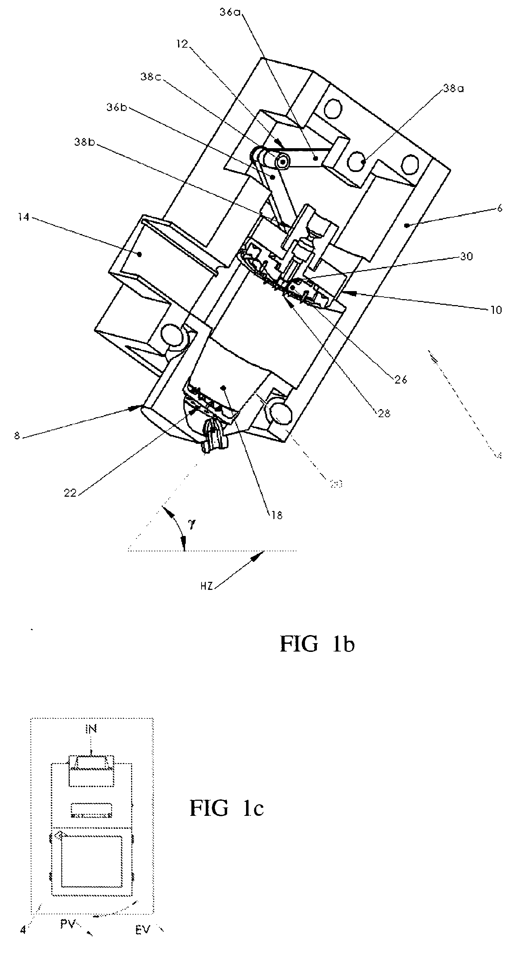

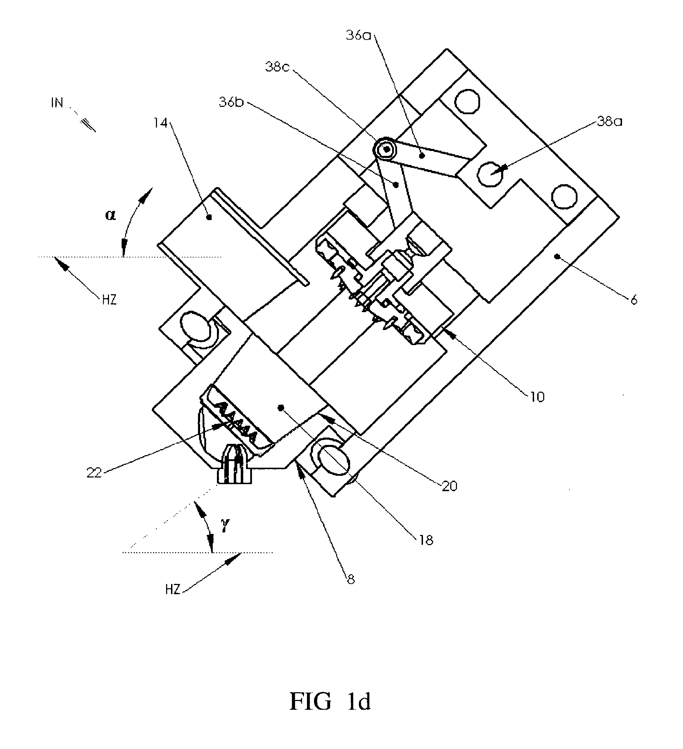

La figure 1 a est une vue en perspective d'un bloc d'extraction d'un appareil pour la confection d'une boisson à partir d'une capsule selon l'invention ;
La figure 1 b est une vue en perspective et en coupe du bloc d'extraction selon la figure 1 a ;
La figure 1 c est une vue du dessus du bloc d'extraction selon la figure 1a ;
La figure 1d est une autre vue en coupe du bloc d'extraction selon la figure 1a ;
La figure 2a est une autre vue en perspective et en coupe du bloc d'extraction selon la figure 1 a, avec la tête d'injection dans la position haute (ouverte), avant introduction d'une capsule ;
La figure 2b est une vue similaire à la figure 2a, montrant l'introduction d'une capsule, en train de tomber dans un logement d'un porte capsule de l'appareil ;
La figure 2c est une vue similaire à la figure 2a, montrant la capsule dans le logement du porte capsule de l'appareil ;
La figure 2d est une figure similaire à la figure 2a avec une capsule dans le logement du porte capsule et la tête d'injection dans la position basse (fermée) prêt pour l'introduction d'eau sous pression ;
La figure 2e est une figure similaire à la figure 2a montrant la tête d'injection en train d'être remontée et la capsule après utilisation en train d'être éjectée ;
La figure 2f est une figure similaire à la figure 2e montrant la tête d'injection presque totalement remontée et la capsule après utilisation en train d'être évacuée ;

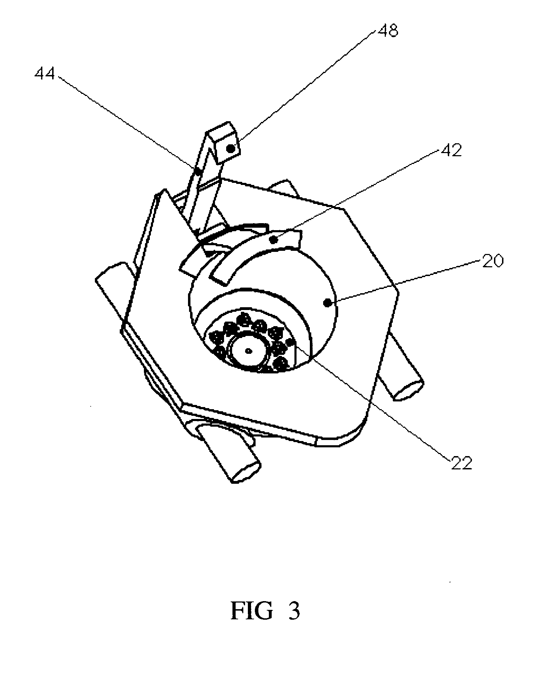

La figure 3 est une vue en perspective du porte-capsule et du mécanisme d'éjection de la capsule ;
La figure 4 est une vue en perspective et en coupe du porte-capsule avec un mécanisme d'éjection selon une deuxième variante ;
Les figures 5a à 5g sont des vues en coupe du bloc d'extraction selon une autre forme d'exécution de l'invention, montrant des étapes dans un cycle d'opération de la machine de l'introduction d'une capsule jusqu'à l'extraction de la capsule ;
Les figures 6a à 6c sont des figures en perspective du bloc d'extraction de la variante illustrée dans les figures 5a à 5g, la figure 6a illustrant le bloc d'extraction prêt pour l'introduction d'une capsule, la figure 6b dans une position lors de l'injection d'eau dans la capsule et de l'extraction d'une boisson, et la figure 6c dans la position d'éjection de la capsule après extraction, des parties du bloc d'extraction étant enlevées pour une meilleure visibilité du porte-capsule.

Faisant référence aux figures, plus particulièrement aux figures 1 a, 1b, 2b et 2d, un appareil pour la confection d'une boisson à partir d'une capsule comprend un bloc d'extraction 4 avec un corps 6, un porte-capsule 8, une tête d'injection 10 et un mécanisme d'ouverture 12 de la chambre d'extraction. Le bloc d'extraction comprend en outre un canal d'introduction 14 pour insertion d'une capsule dans l'appareil, et un canal ou orifice d'éjection 16 pour l'évacuation d'une capsule après utilisation.

Le porte-capsule 8 comprend un logement 18 avec une paroi latérale 20 et une paroi d'extraction 22 formant le fond du logement 18. La paroi latérale 20 du logement a une forme évasée tronquée correspondant à la forme de la capsule 3 destinée à être reçue dans le logement. La paroi d'extraction peut avoir une ou plusieurs pointes de perforation et un ou plusieurs orifices pour l'écoulement du produit liquide extrait de la capsule après perforation. La paroi d'extraction et le logement du porte-capsule, ainsi que la capsule peuvent avantageusement être réalisés tels que décrits dans le brevets EP 507905 ou EP1646304 ou peuvent avoir d'autres configurations. La paroi latérale de l'enveloppe de la capsule a une forme évasée tronquée, l'angle de conicité dans une forme d'exécution étant entre 0° et 10°. La paroi de fond de la capsule peut être de forme essentiellement convexe, concave ou plate.

Le porte-capsule selon l'invention comprend en outre un mécanisme d'éjection de la capsule 24 qui sera décrit plus en détail ci-dessous.

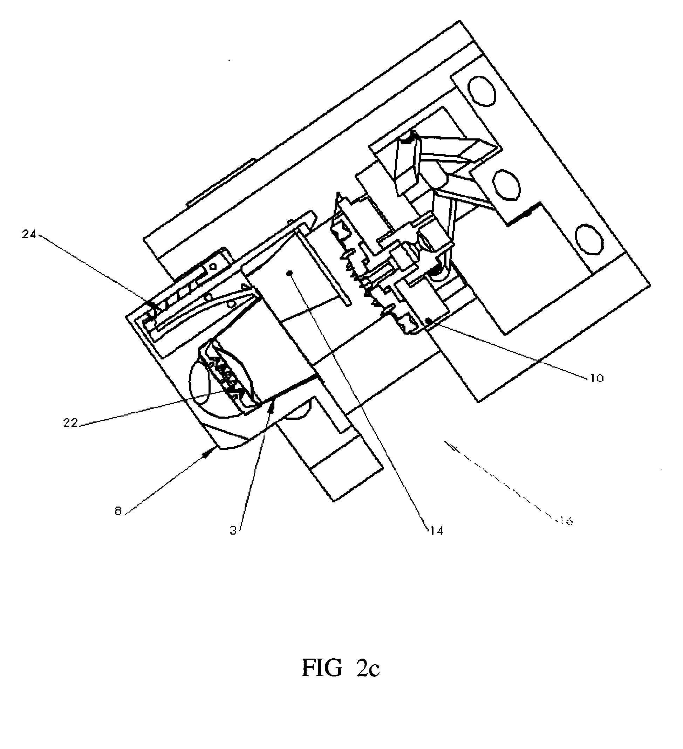

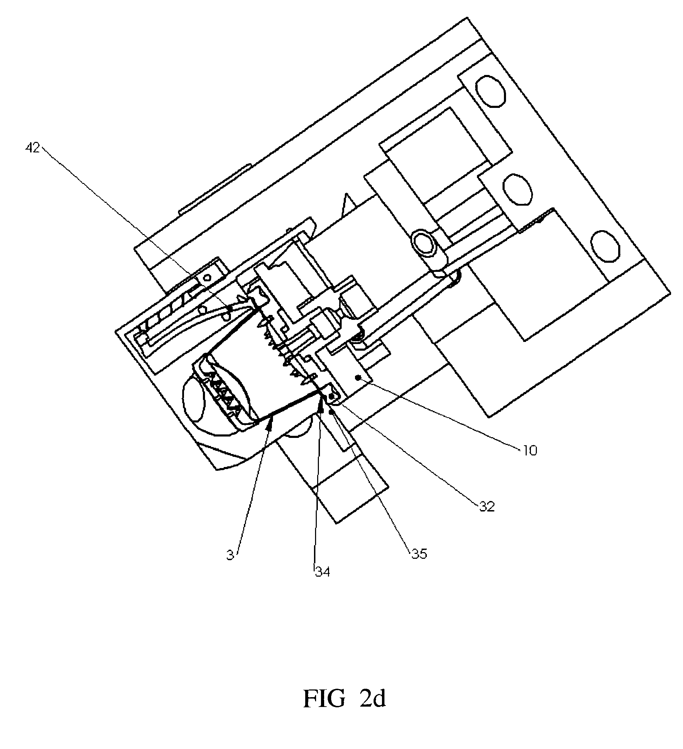

La tête d'injection 10 comprend une paroi d'injection 26 avec des pointes de perforation 28 et un canal d'alimentation d'eau sous pression 30 pour l'injection d'eau à travers la paroi supérieure 32 de la capsule quand la tête d'injection est fermée contre le porte-capsule 8, tel qu'illustré dans la figure 2d. La paroi d'injection peut avantageusement avoir la construction telle que décrite dans le brevet EP1646304 ou peut avoir d'autres configurations.

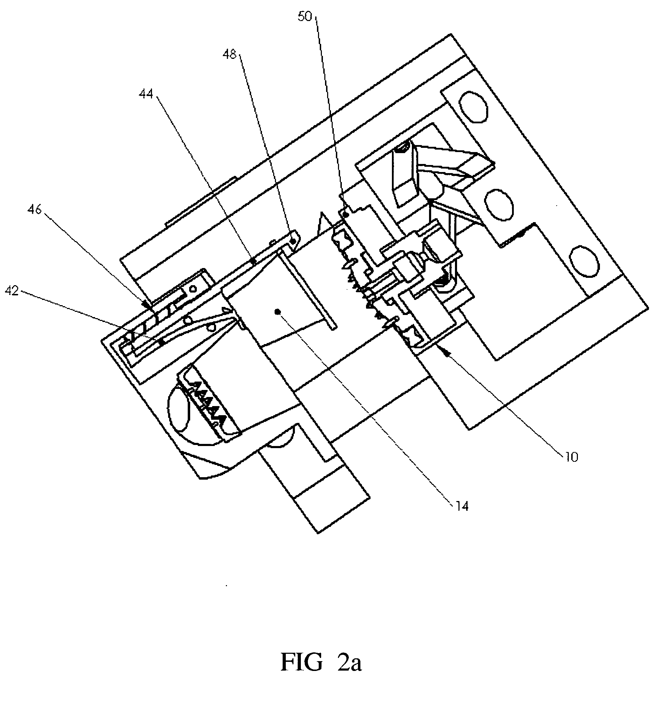

La tête d'injection est amovible entre une position d'ouverture permettant l'introduction d'une capsule dans le logement 18 du porte-capsule 8, tel qu'illustré dans la figure 2a, et une position fermée où la tête d'injection est plaquée contre le porte-capsule tel qu'illustré dans la figure 2d. Un joint 32 entourant la paroi d'injection permet de sceller hermétiquement la tête d'injection contre la collerette 34 de la capsule qui est plaqué de l'autre coté contre le rebord 35 du porte-capsule.

Le déplacement de la tête d'injection est actionné par le mécanisme d'ouverture et fermeture 12, ce mécanisme comprenant au moins deux bras ou paires de bras articulés 36a, 36b. Un bras ou paire de bras 36a est fixé de manière pivotante 38a sur le corps 6 du bloc d'extraction et un autre bras ou paire de bras 36b est fixé de manière pivotante 38b sur la tête d'injection, les deux bras (ou deux paires de bras) étant articulés l'un par rapport à l'autre autour d'un axe d'articulation 38c. L'axe de rotation 38a du premier bras articulé 36a est solidaire d'un levier 40 qui, dans la forme d'exécution illustrée, est destiné à être commandé manuellement par un utilisateur pour la rotation du premier bras articulé 36a.

Le premier bras (ou paires de bras) articulé 36a est plus court que le deuxième bras (ou paires de bras) articulé 36b afin de réduire l'encombrement du bloc d'extraction, notamment le volume nécessaire pour les déplacements des bras articulés. Le couple nécessaire pour le déplacement de la tête d'injection en position haute est faible. Par contre, pour la fermeture hermétique de la tête d'injection contre la collerette de la capsule et le rebord du porte-capsule, tenant compte des pressions exercées lors de l'injection d'eau sous pression, la force d'appui doit être grande. Les bras articulés permettant un grand déplacement à faible couple au début du mouvement de fermeture et un faible déplacement à force élevée pour la fermeture. Le verrouillage dans la position fermée est assuré lorsque les bras articulés 36a, 36b sont alignés ou ont légèrement passé le point d'alignement, tel qu'illustré dans la figure 2d.

Le mécanisme d'éjection de la capsule 24 comprend un poussoir d'éjection 42 couplé à un tirant 44, et un ressort de rappel 46.

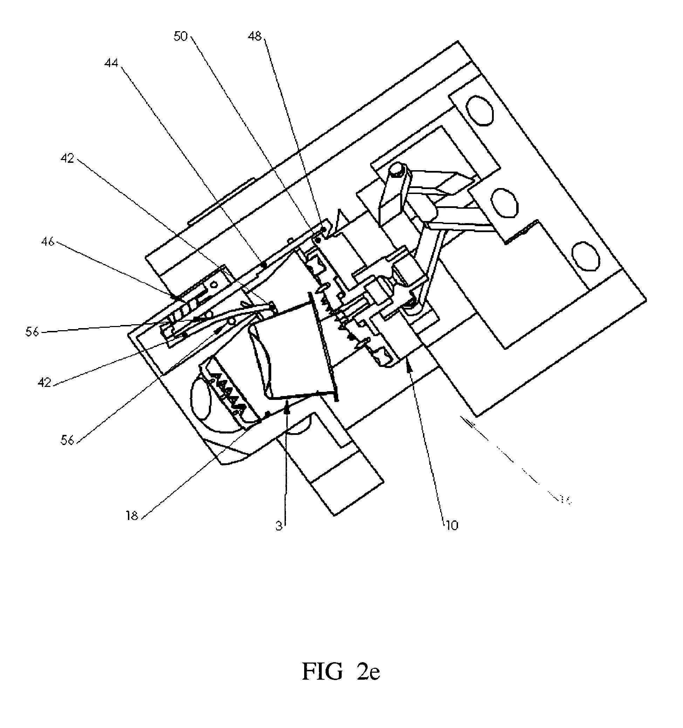

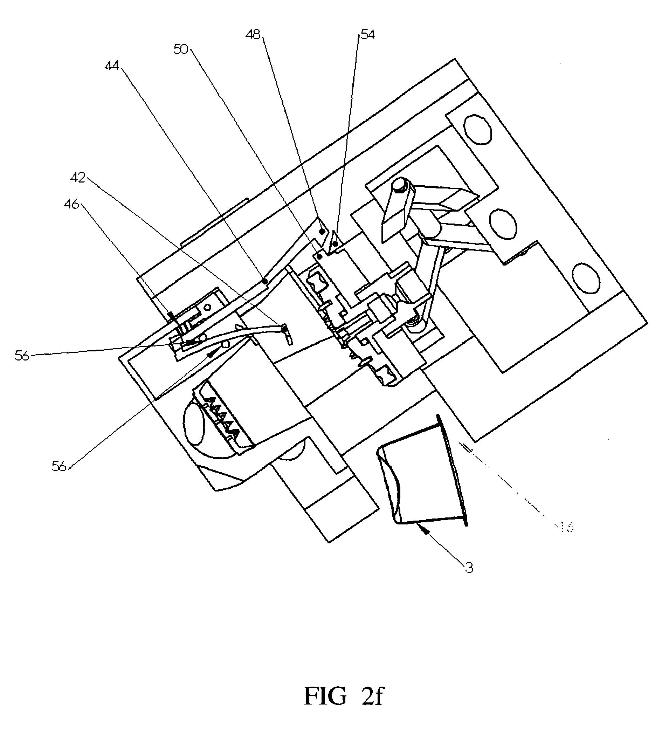

Le ressort de rappel maintient le poussoir 42 dans une position en retrait (position basse) telle qu'illustrée dans la figure 2a. Le tirant 44 comprend un crochet 48 destiné à engager un crochet ou épaule complémentaire 50 sur la tête d'injection 10 lorsque celle-ci est remontée vers sa position haute tel qu'illustré dans la figure 2e. Lorsque le tirant est remonté par la tête d'injection lors de l'ouverture, le poussoir 42 est remonté hors de sa position de retrait et soulève la collerette 52 de la capsule afin de l'éjecter du logement 18 et la faire évacuer par l'orifice d'évacuation 16. Le crochet 48 du tirant est libéré de l'épaule ou du crochet complémentaire 50 de la tête d'injection par une came 54, solidaire ou fixée au corps 6, lorsque la tête d'injection atteint ou est proche de sa position haute (c'est-à-dire la plus ouverte) tel qu'illustré dans la figure 2f.

Le tirant est ainsi libéré et repoussé par le ressort 46 dans sa position de retrait, tel qu'illustré dans la figure 2a, prêt à l'introduction d'une nouvelle capsule dans le logement du porte-capsule.

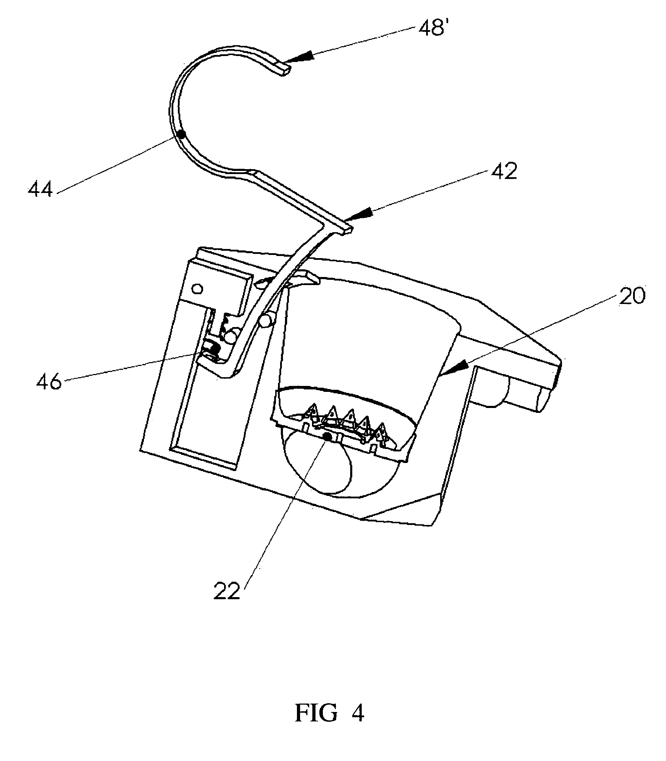

Dans la variante selon la figure 4, le poussoir est repoussé par un ressort de rappel 46. Toutefois la partie de tirant comprend une boucle dont l'extrémité libre 48' fait office de crochet pour engager l'épaule 50 de la tête d'injection, la boucle ayant une certaine élasticité lui permettant d'être décrochée de la tête d'injection lorsque celle-ci atteint sa position haute (ouverte).

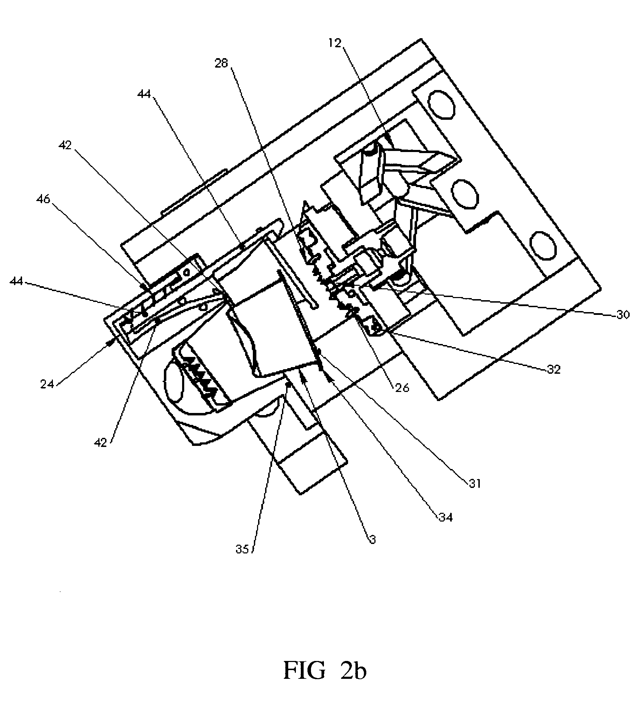

Pour la préparation d'une boisson, la tête d'injection est dans sa position haute tel qu'illustré dans la figure 2a, et l'utilisateur insère une capsule dans le canal d'introduction 14. L'axe IN du canal d'introduction a un angle d'inclinaison (α) entre 30 et 70 degrés, de préférence entre 40 et 60 degrés, par exemple environ 45 degrés, par rapport à un plan horizontal HZ. La capsule 3 glisse par force de gravité le long du canal d'introduction jusqu'à ce qu'elle tombe dans le logement 18 du porte-capsule 8 tel qu'illustré dans la figure 2b.

Dans une forme d'exécution, la combinaison de l'angle d'inclinaison (α) du canal, du poids, de la forme de la capsule et du coefficient de frottement de la capsule contre le canal est configurée pour assurer une vitesse de pointe (V) de la capsule au moment juste avant de buter contre la paroi latérale, entre 0,5ms⁻¹ et 3,0ms⁻¹, de préférence entre 1,0ms⁻¹ et 2,0ms⁻¹. L'énergie cinétique de la capsule est, par cette mesure, optimisée pour assurer que la capsule tombe dans le logement 18 de manière fiable et en position correcte.

Dans une forme d'exécution, la capsule remplie d'une substance pour la préparation d'une boisson, a une répartition de poids telle que le centre de gravité G est dans la partie inférieure de la capsule, à savoir entre la ligne à mi-hauteur M et le fond. Cela permet d'améliorer l'orientation de la capsule lorsqu'elle tombe dans le logement 18 afin d'assurer qu'elle tombe de manière fiable. Le centre de gravité peut être abaissé en variant l'épaisseur et la forme de l'enveloppe de la capsule, par exemple en ayant un ajout de matière sur la paroi de fond de la capsule. Le fond de la capsule peut être plus épais que les parois latérales de la capsule.

Le centre de gravité peut être abaissé aussi en ne remplissant que partiellement l'enveloppe de la capsule d'une substance pour la préparation d'une boisson, à un niveau inférieur à 95%, de préférence inférieure à 90% du volume total de l'intérieur de la capsule.

Le mécanisme d'ouverture et fermeture 12 est ensuite actionné par la rotation du levier 40 qui fait tourner le premier bras articulé 36a, qui fait pivoter à son tour le deuxième bras articulé 36b, faisant descendre la tête d'injection 10 jusqu'à ce qu'elle vienne en appui contre la capsule dans le logement 18 tel qu'illustré dans la figure 2d. Dans cette position de fermeture, le joint 32 de la tête d'injection s'appuie hermétiquement sur la face supérieure de la collerette 34 de la capsule prise en sandwich contre le rebord du porte-capsule, et les pointes 28 de la tête d'injection transpercent la paroi supérieure de la capsule.

L'eau sous pression entre 5 et 12 bars est injectée par le canal d'alimentation 30 et rentre dans la capsule par les orifices percés par les points 28. Lorsque la pression d'eau à l'intérieur de la capsule atteint un certain niveau, le fond de la capsule descend contre les pointes de perforation de la paroi d'extraction 22 et la substance à extraire s'écoule à travers les orifices de la paroi d'extraction.

Après la fin d'injection d'eau, la tête d'injection est remontée en actionnant le levier 40. Lors de la remontée, la tête d'injection engage le crochet 48 du mécanisme d'éjection qui, en étant relevé, remonte le poussoir 42 qui appuie sur la collerette 34 de la capsule et l'éjecte du logement 18. Le poussoir 42, guidé par des paliers 56 ou glissières effectue de préférence un mouvement curviligne ou rectiligne mais incliné vers l'orifice d'évacuation 16 pour mieux projeter la capsule 3 dans la direction de l'orifice d'évacuation.

La rotation des bras articulés 36a, 36b peut être effectuée manuellement comme pour la forme d'exécution illustrée, mais elle peut être également effectuée par un moteur. Le mécanisme d'ouverture et fermeture de la tête d'injection peut également être construit autrement, par exemple sous forme d'un actionneur linéaire avec un système vis-écrou, ou par un système hydraulique.

Dans la première forme d'exécution illustrée, l'axe IN du canal d'introduction 14 de la capsule n'est pas aligné sur un même axe EV que l'orifice d'évacuation 16 de la capsule. Cela permet de former une butée arrêtant la capsule et la faisant tomber dans le logement 18 du porte-capsule vers la fin de la descente dans le canal d'introduction 14. Dans la forme d'exécution illustrée, l'orifice d'évacuation est dirigé à un angle β de préférence entre 30 et 50 degrés, par exemple environ 45 degrés d'un plan vertical PV traversant l'axe IN du canal d'introduction (voir figure 1 c). Cette configuration permet également une évacuation des capsules dans une corbeille de collecte des capsules usagées à côté du bloc d'extraction. Avantageusement, l'introduction de la capsule dans son logement ne nécessite aucun mécanisme particulier ou compliqué, et l'éjection de la capsule de son logement est effectuée automatiquement et simplement en remontant la tête d'injection. Un système simple, fiable et ergonomique d'introduction et d'éjection des capsules est donc réalisé par la présente invention.

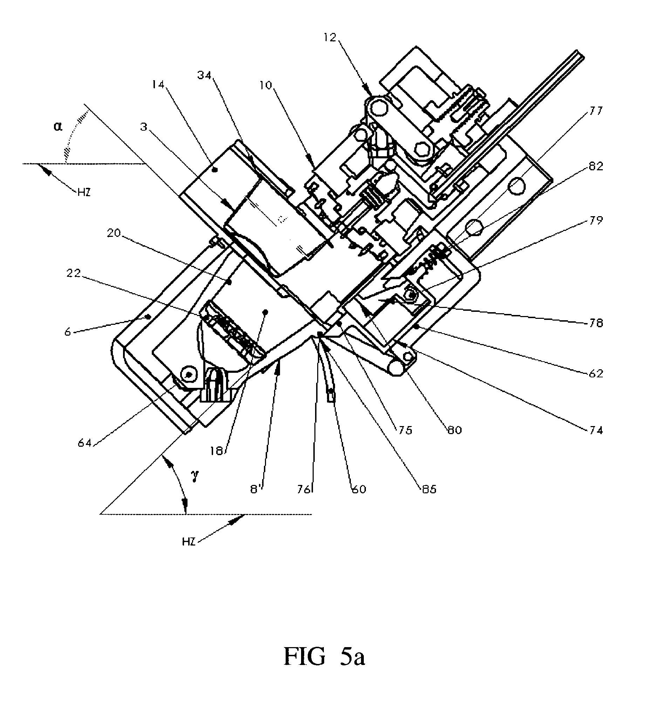

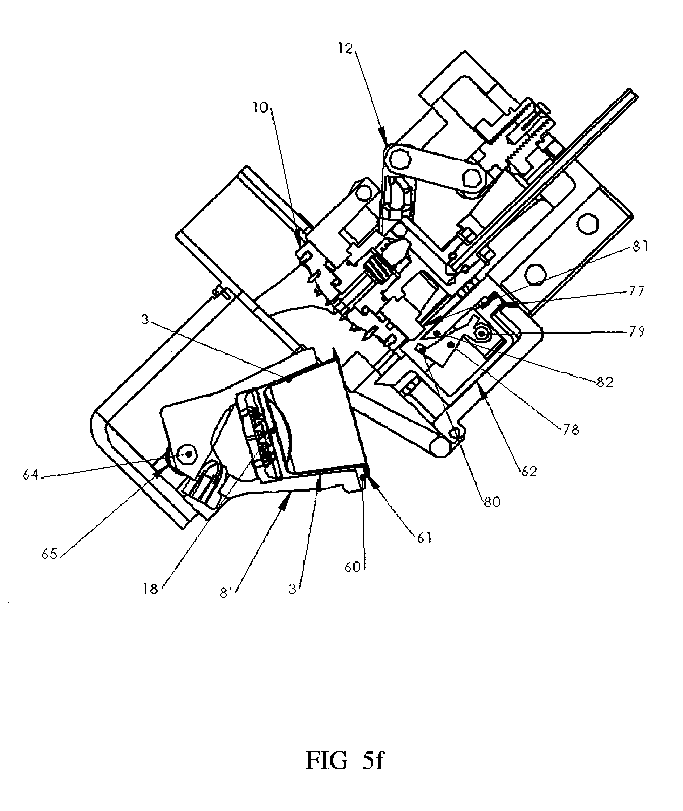

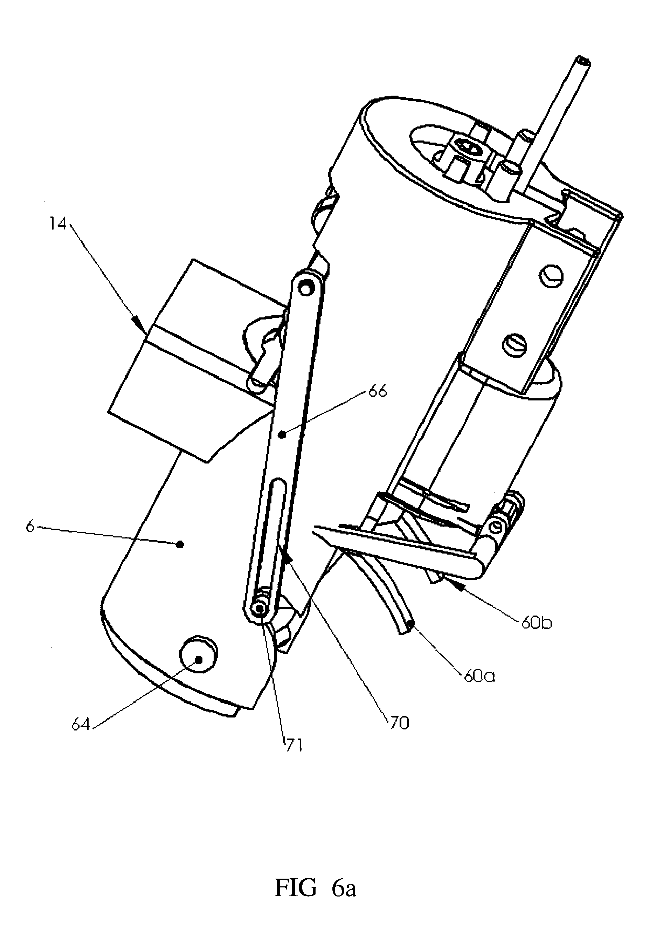

Faisant maintenant référence aux figures 5a à 5g et aux figures 6a à 6c, un bloc d'extraction selon une autre forme d'exécution de l'invention est illustré, dans lequel le mécanisme d'éjection et d'évacuation de la capsule est différent de ceux décrits précédemment. Pour ce qui concerne les éléments avec les mêmes numéros de référence, le lecteur pourra faire référence à la description y relative ci-dessus.

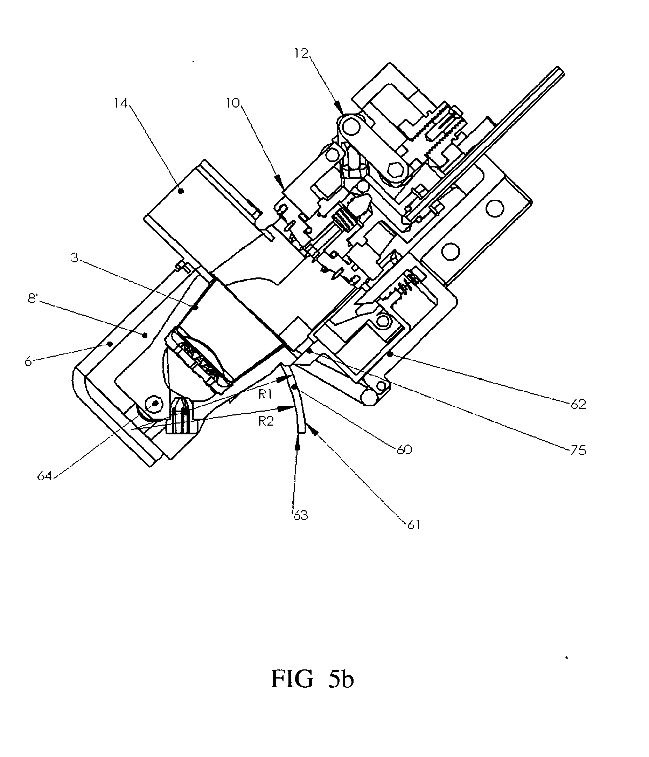

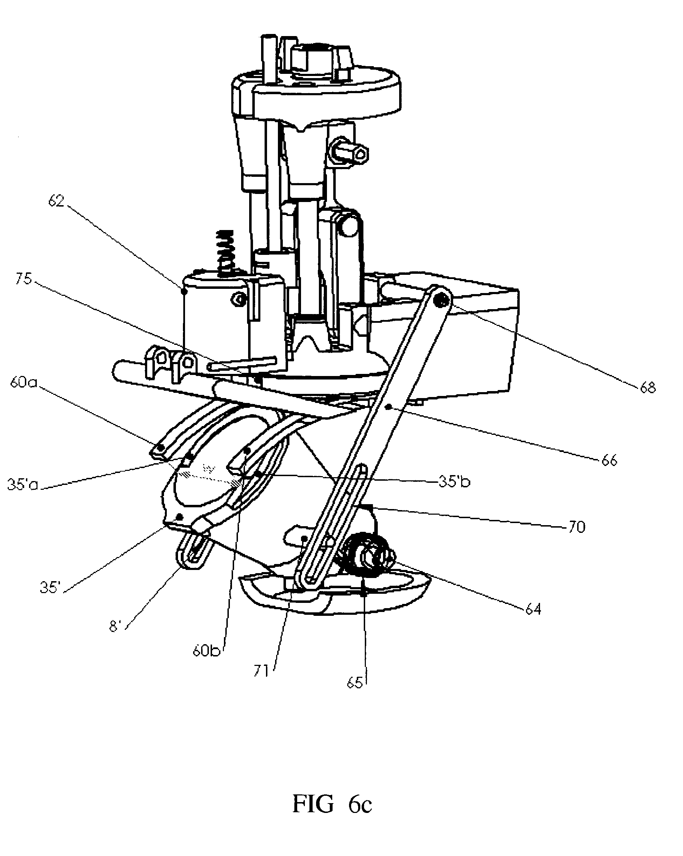

Dans cette variante, le mécanisme d'évacuation de la capsule 24' comprend un rail d'évacuation 60 ainsi qu'un dispositif de verrouillage 62 du porte-capsule 8'. Le porte capsule 8' est monté de manière pivotante autour d'un axe de rotation 64, par rapport au corps 6 du bloc d'extraction. Le rail d'évacuation 60 est solidaire du corps 6 du bloc d'extraction et comprend de préférence deux parties de rail 60a, 60b, tel qu'illustré dans la figure 6c, disposées de part et d'autre de la cavité 18 du porte-capsule. Les parties de rail 60a, 60b sont séparées par une distance w légèrement supérieure au diamètre d de la partie de la capsule en dessous de la collerette 34. Le porte-capsule comprend un rebord 35' avec des parties 35a, 35b en creux se positionnant sous les rails d'évacuation lorsque le porte-capsule est dans la position haute (position d'introduction de la capsule et d'extraction telle qu'illustrée dans les figures 5a, 5b). La partie du rebord 35' du porte-capsule qui n'est pas disposée sous le rail de guidage est à la hauteur de la surface supérieure du rail d'évacuation dans la position d'extraction, de sorte à ce que la collerette de la capsule puisse s'appuyer contre un rebord quasi continu autour du logement 18.

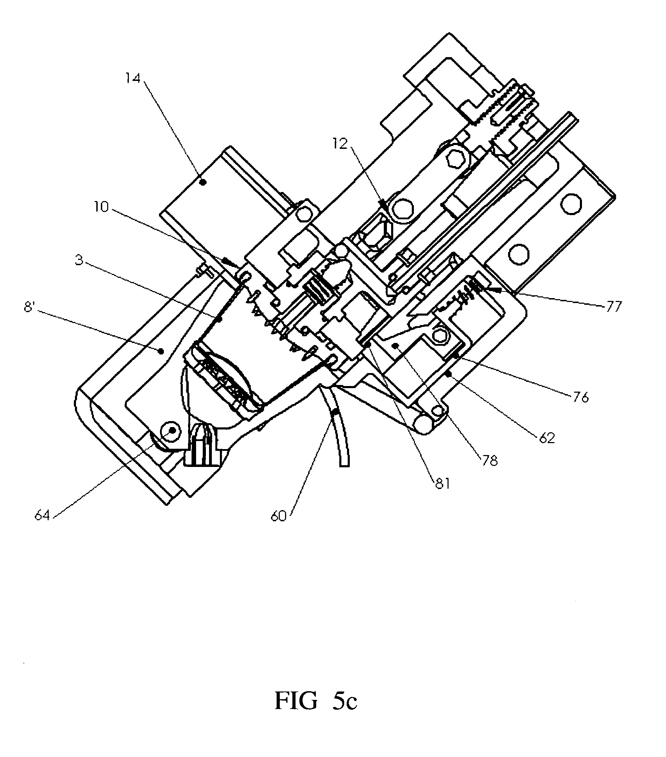

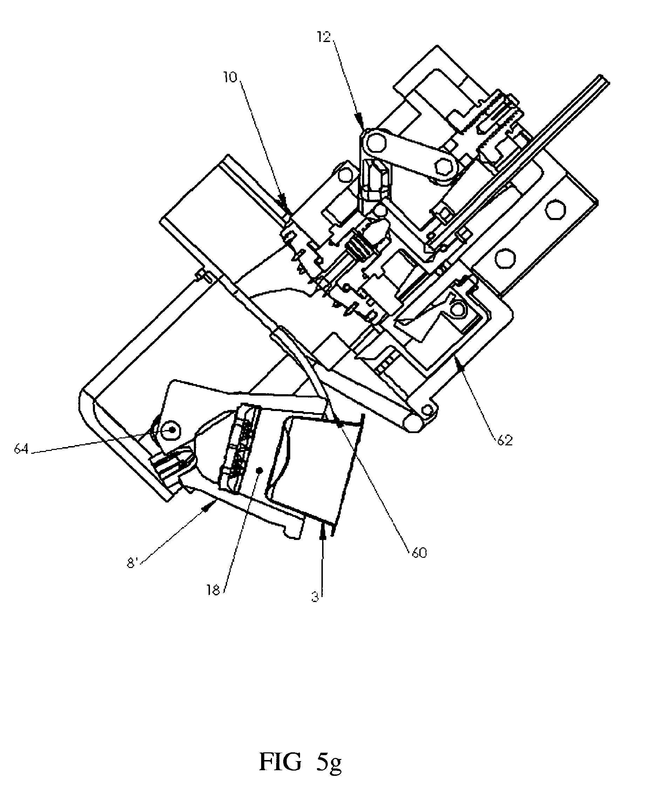

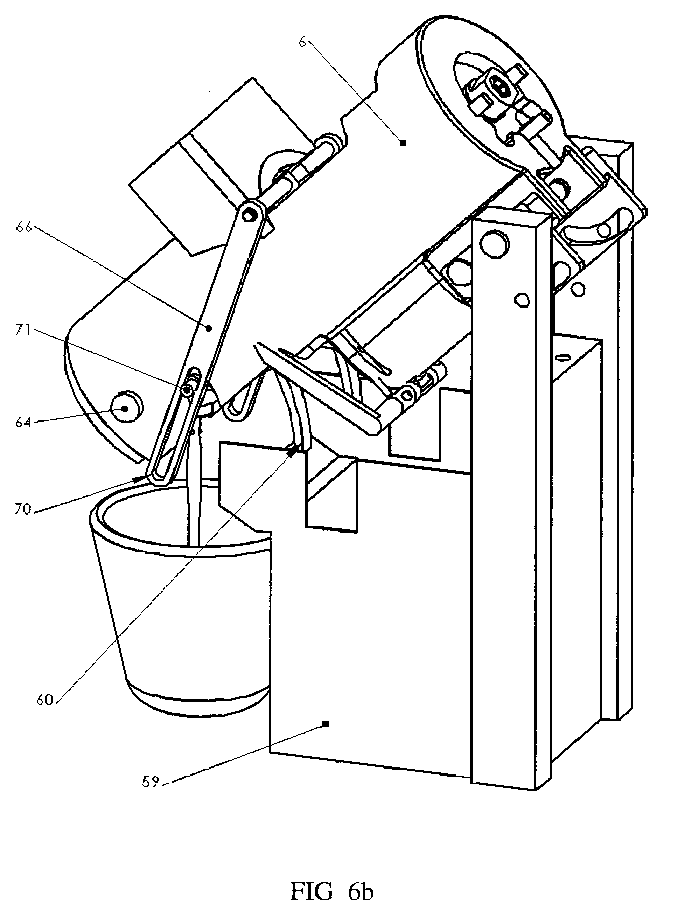

La distance de la surface supérieure 61 du rail d'évacuation 60 par rapport à l'axe de pivotement 64 du porte-capsule, est plus grande vers l'extrémité libre 63 (R1) que la distance de la surface supérieure du rail d'évacuation par rapport à l'axe de pivotement à proximité du corps du bloc d'extraction (R2). Ainsi, lorsque le porte-capsule pivote de sa position d'extraction tel qu'illustré dans la figure 5c, à la position d'éjection tel qu'illustré dans la figure 5g, le rail, en appuyant contre le dessous de la collerette de la capsule qui glisse le long du rail, soulève la capsule en dehors du logement 18. En raison de l'accélération du porte-capsule lors de son pivotement et du mouvement rapide, la capsule est éjectée hors du logement du porte-capsule avec une certaine vitesse permettant de bien se dégager du bloc d'extraction et d'être propulsée dans un bac d'évacuation 59 (voir fig. 6b) des capsules disposé sous le bloc d'extraction.

La rotation du porte-capsule de sa position d'extraction à la position d'évacuation est effectuée par un ressort 65, dans l'exemple illustré un ressort toroïdal, mais beaucoup d'autres formes de ressort et de mécanismes de rotation de la capsule peuvent être envisagés dans le cadre de cette invention. La rotation de la capsule peut également être entraînée par un moteur ou actuateur électrique.

Le retour du porte capsule de sa position d'évacuation à la position d'extraction est assuré par un bras de rappel 66 (voir figure 6c) qui est fixé de manière pivotante à la tête d'injection 10. Le bras de rappel 66 est monté de manière pivotante autour d'un axe 68 fixé à une partie solidaire de la tête d'injection 10, et vers l'autre extrémité du bras il y a une fente 70 dans laquelle un doigt 71 solidaire du corps du porte-capsule 8' est inséré. La fente 70 permet un certain déplacement du doigt 71 relatif au bras de rappel 66 lorsque la tête d'injection se déplace entre la position basse d'extraction (tel qu'illustré dans la figure 5c) à une position intermédiaire entre la position d'extraction et la position haute. Lorsque la tête d'injection remonte de cette position intermédiaire à la position haute telle qu'illustrée dans la figure 5a, le bras de rappel 66 engage le doigt 71 du porte-capsule et le tourne jusque dans sa position haute (position d'extraction). Dans cette position haute illustrée dans les figures 5a et 6a.

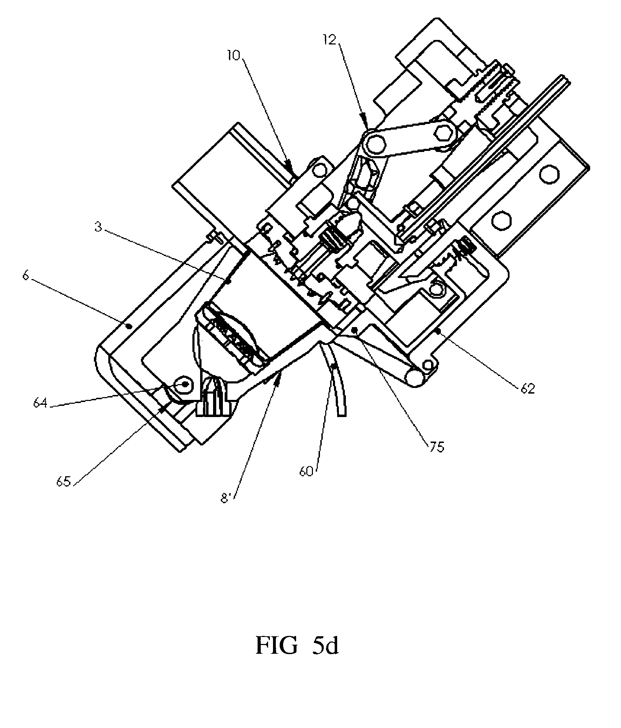

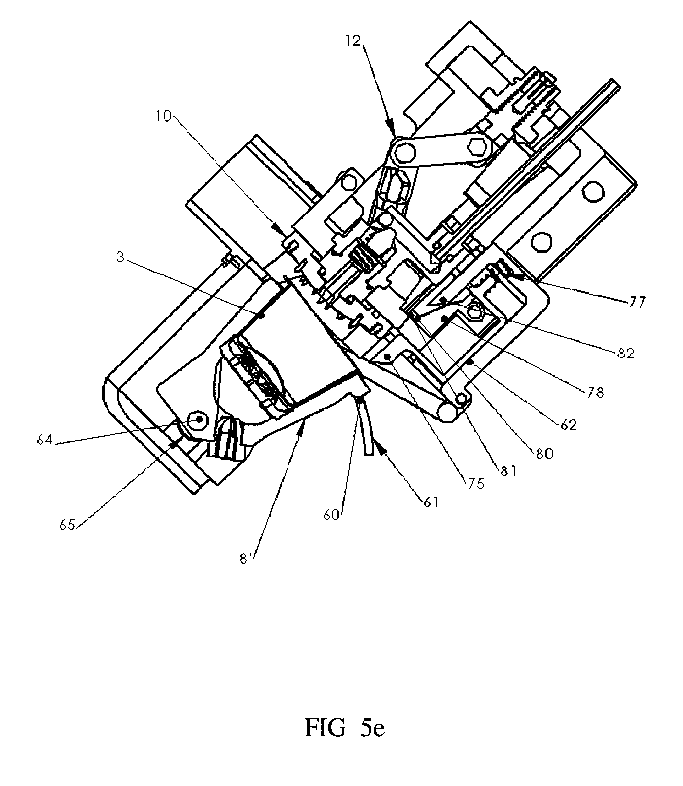

Le dispositif de verrouillage 62 du porte-capsule comprend un corps amovible 74 avec un doigt de verrouillage 75 en appui contre une épaule 76 du porte-capsule lorsque il est dans sa position d'extraction et le corps amovible est dans sa position de verrouillage, tel qu'illustré dans la figure 5a. Le corps amovible est monté de manière glissante sur le corps 6 du bloc d'extraction, un ressort 77 disposé entre le bloc d'extraction et le corps amovible repoussant le corps amovible dans la position de verrouillage illustrée dans la figure 5a. Un crochet 78 est monté sur un axe 79 de manière pivotante par rapport au corps amovible 74, et comporte une protubérance 80 destinée à engager une épaule complémentaire 81 de la de la tête d'injection (voir figure 5c) lorsqu'elle est descend dans la position d'extraction. Lorsque la tête d'éjection remonte vers sa position haute après un cycle d'extraction, le crochet 78 qui engage la tête d'éjection fait remonter le corps amovible 74, contre la poussée du ressort 77 de sorte à ce que le doigt de verrouillage 75 se dégage de l'épaule 76 du porte-capsule, tel qu'illustré dans les figures 5d et 5e. Cela permet au porte-capsule de pivoter à la position d'évacuation par la force du ressort 64 (illustré dans la figure 6c) agissant sur le porte-capsule. Lorsque la tête d'injection 10 s'approche de sa position haute, le crochet 78 bute contre une came 82 fixe par rapport au bloc 6 d'extraction, causant la rotation du crochet. Le crochet se dégage de la tête d'injection pour permettre au corps amovible 76 de retourner à sa position de verrouillage tel qu'illustré dans la figure 5g.

Le doigt de verrouillage 60 peut avoir une surface oblique 85 agissant comme surface de came pour remonter le doigt de verrouillage lorsque le porte-capsule est pivoté de retour dans sa position d'extraction. En effet, le doigt de verrouillage 75 est déjà dans sa position basse avant que le porte-capsule soit complètement retourné dans la position d'extraction et la surface de came oblique 85 permet au corps amovible de verrouillage de remonter pour permettre le passage de l'épaule 76 sous le doigt de verrouillage qui est repoussé ensuite dans sa position de verrouillage engageant l'épaule 76 du porte-capsule.

Dans les formes d'exécution illustrées, la capsule glisse par gravitation seule dans le canal d'introduction 14 jusqu'au logement 18. Toutefois, il est également possible de prévoir un doigt ou poussoir (non-illustré), par exemple à l'intérieur d'un couvercle (non-illustré) pivotant par rapport au bloc d'extraction, qui pousse la capsule le long du canal d'introduction jusqu'à sa position au-dessus du logement 18. Ce couvercle avec poussoir peut aussi agir sur un capteur de position détectant sa position fermée, indiquant que la capsule est introduite et que la tête d'injection peut être fermée sur le porte-capsule. D'autres moyens pour aider à convoyer la capsule le long du canal d'introduction jusqu'à sa position au-dessus du logement peuvent être réalisés sans sortir du cadre de l'invention. Par exemple, des faces opposées du canal peuvent comprendre des roulements sur ressorts qui sont écartés élastiquement quand la capsule est introduite dans le canal d'introduction, et ensuite qui poussent la capsule vers le logement 18 du porte-capsule en retournant à leur position de repos.

## Revendications

1. Appareil et capsule pour la préparation d'une boisson ou d'un aliment liquide, la capsule (3) contenant une substance à extraire par introduction d'eau sous pression dans la capsule, l'appareil comprenant un bloc d'extraction (4) avec un canal d'introduction (14) de la capsule, un porte-capsule (8) avec un logement, une paroi d'extraction (22), une paroi latérale (20), une tête d'injection (10) pour l'injection d'eau dans la capsule, et un mécanisme d'ouverture et fermeture (12) pour effectuer un mouvement relatif entre le porte-capsule et la tête d'injection pour l'ouverture et la fermeture de la tête d'injection au porte-capsule, le canal d'introduction étant incliné à un angle (α) entre 30 et 70 degrés par rapport à un plan horizontal (HZ), **caractérisé en ce que** l'angle (γ) entre une portion de la paroi latérale (20) du porte-capsule distant du canal d'introduction et le plan horizontal (HZ) est entre 55 et 25 degrés et **en ce que** le mécanisme d'ouverture et fermeture de la tête d'injection comprend au moins deux bras ou paires de bras articulés, un premier (36a) étant monté de manière pivotante au corps (6) du bloc d'extraction et l'autre (36b) de manière pivotante à la tête d'injection, le premier bras articulé ayant une longueur plus faible que le deuxième bras articulé..

2. Appareil et capsule selon la revendication 1, **caractérisés en ce que** le canal d'introduction est incliné à un angle entre 40 et 50 degrés par rapport au plan horizontal, et l'angle moyen entre la paroi latérale et le plan horizontal est entre 50 et 40 degrés.

3. Appareil et capsule selon la revendication 1 ou 2, **caractérisés en ce que** le bloc d'extraction comprend un orifice d'éjection (16) de la capsule orienté à un angle latéral β entre 20 et 60 degrés, par rapport à un plan vertical (PV) traversant un axe (IN) du canal d'introduction.

4. Appareil et capsule selon la revendication précédente, **caractérisés en ce que** l'angle latéral β est entre 30 et 50 degrés.

5. Appareil et capsule selon l'une quelconque des revendications précédentes, **caractérisés en ce qu'**il comprend un mécanisme d'éjection (24) de la capsule comprenant un poussoir (42) configuré pour engager le dessous d'une collerette de la capsule lorsque la tête d'injection est remontée à sa position ouverte.

6. Appareil et capsule selon la revendication précédente, **caractérisés en ce que** le mécanisme d'éjection de la capsule comprend un tirant (44) ou partie de tirant solidaire du poussoir et comprenant un crochet 48 configuré pour engager une épaule ou crochet (50) de la tête d'injection lorsqu'elle est remontée.

7. Appareil et capsule selon l'une quelconque des deux revendications précédentes, **caractérisés en ce que** le mécanisme d'éjection de la capsule comprend un ressort de rappel (46) repoussant le poussoir (42) dans une position de retrait permettant l'insertion d'une capsule dans le logement du porte-capsule.

8. Appareil et capsule selon l'une quelconque des trois revendications précédentes, **caractérisés en ce que** le mécanisme d'éjection de la capsule comprend une came (54) engageant le tirant lorsque la tête d'injection approche sa position ouverte afin de libérer le tirant de la tête d'injection.

9. Appareil et capsule selon l'une quelconque des revendications 1 à 4, **caractérisés en ce que** le porte-capsule est monté de manière pivotante par rapport au corps (6) du bloc d'extraction (4), le porte-capsule pouvant être pivoté d'une position d'extraction à une position d'éjection de la capsule, l'appareil comprenant en outre un mécanisme d'éjection de la capsule comprenant un rail configuré pour supporter un rebord inférieur de la capsule lorsque le porte-capsule est pivoté de sa position d'extraction à sa position d'éjection.

10. Appareil et capsule selon la revendication précédente, **caractérisés en ce que** le rail a une forme telle que la distance entre le rail et l'axe de pivotement du porte-capsule augmente de la position d'extraction à la position d'éjection.

11. Appareil et capsule selon la revendication 5 ou 6, **caractérisés en ce que** le rail a une forme courbe et lisse.

12. Appareil et capsule selon l'une des revendications précédentes, **caractérisés en ce que** la capsule a une répartition de poids telle que le centre de gravité G est dans la partie inférieure de la capsule.

13. Appareil et capsule selon l'une des revendications précédentes, **caractérisés en ce que** la capsule n'est remplie que partiellement à un niveau inférieur à 90% du volume total de l'intérieur de la capsule.

14. Appareil et capsule selon l'une des revendications précédentes, **caractérisés en ce que** la combinaison de l'angle d'inclinaison (α) du canal, du poids, de la forme de la capsule et du coefficient de frottement de la capsule contre le canal est configurée pour assurer une vitesse de pointe de la capsule au moment juste avant de buter contre la paroi latérale du logement du porte-capsule, entre 0,5ms-1 et 3,0ms-1, de préférence entre 1,0ms-1 et 2,0ms-1.

15. Appareil et capsule selon l'une des revendications 9 à 11 **caractérisé en ce que** le rail comprend deux parties de rail (60a, 60b) disposées de part et d'autre du logement (18) du porte capsule.

16. Appareil et capsule selon l'une des revendications 9 à 12 **caractérisé en ce que** le porte-capsule comprend un rebord (35') avec des parties (35a, 35b) en creux se positionnant sous les rails d'évacuation lorsque le porte-capsule est dans la position haute.

## Patentansprüche

1. Vorrichtung und Kapsel zur Zubereitung eines Getränks oder eines flüssigen Lebensmittels, wobei die Kapsel (3) eine durch Einführen von Wasser unter Druck in die Kapsel zu extrahierende Substanz enthält, wobei die Vorrichtung einen Extraktionsblock (4) mit einem Einführkanal (14) der Kapsel, einen Kapselhalter (8) mit einer Aufnahme, eine Extraktionswand (22), eine Seitenwand (20), einen Injektionskopf (10) zum Einspritzen von Wasser in die Kapsel und einen Öffnungs- und Schließmechanismus (12) zwecks Durchführung einer relativen Bewegung zwischen dem Kapselhalter und dem Injektionskopf zum Öffnen und Schließen des Injektionskopfs am Kapselhalter umfasst, wobei der Einführkanal in einem Winkel (α) zwischen 30 und 70 Grad im Verhältnis zu einer horizontalen Ebene (HZ) geneigt ist, **dadurch gekennzeichnet, dass** der Winkel (γ) zwischen einem Abschnitt der Seitenwand (20) des Kapselhalters beabstandet vom Einführkanal und der horizontalen Ebene (HZ) zwischen 55 und 25 Grad ist und dass der Öffnungs- und Schließmechanismus des Injektionskopfs mindestens zwei angelenkte Arme oder Armpaare umfasst, wobei ein erster (36a) schwenkbar am Körper (6) des Extraktionsblocks und der andere (36b) schwenkbar am Injektionskopf montiert ist, wobei der erste angelenkte Arm eine geringere Länge als der zweite angelenkte Arm hat.

2. Vorrichtung und Kapsel nach Anspruch 1, **dadurch gekennzeichnet, dass** der Einführkanal in einem Winkel zwischen 40 und 50 Grad im Verhältnis zur horizontalen Ebene geneigt ist und der mittlere Winkel zwischen der Seitenwand und der horizontalen Ebene zwischen 50 und 40 Grad beträgt.

3. Vorrichtung und Kapsel nach Anspruch 1 oder 2, **dadurch gekennzeichnet, dass** der Extraktionsblock eine Auswurföffnung (16) der Kapsel umfasst, die in einem seitlichen Winkel β zwischen 20 und 60 Grad im Verhältnis zu einer vertikalen Ebene (PV) bei Durchquerung einer Achse (IN) des Einführkanals ausgerichtet ist.

4. Vorrichtung und Kapsel nach vorangehendem Anspruch, **dadurch gekennzeichnet, dass** der seitliche Winkel β zwischen 30 und 50 Grad beträgt.

5. Vorrichtung und Kapsel nach einem der vorangehenden Ansprüche, **dadurch gekennzeichnet, dass** er einen Auswurfmechanismus (24) der Kapsel umfasst, der einen Drücker (42) umfasst, der konfiguriert ist, um unter einen Kragen der Kapsel zu fassen, wenn der Injektionskopf in seine geöffnete Stellung angehoben ist.

6. Vorrichtung und Kapsel nach vorangehendem Anspruch, **dadurch gekennzeichnet, dass** der Auswurfmechanismus der Kapsel einen Zugstab (44) oder mit dem Drücker verbundenen Zugstabteil umfasst und einen Haken (48) umfasst, der konfiguriert ist, um in einen Absatz oder Haken (50) des Injektionskopfs einzugreifen, wenn er angehoben ist.

7. Vorrichtung und Kapsel nach einem der zwei vorangehenden Ansprüche, **dadurch gekennzeichnet, dass** der Auswurfmechanismus der Kapsel eine Rückholfeder (46) umfasst, die den Drücker (42) in eine zurückgesetzte Stellung zurückdrückt, die das Einsetzen einer Kapsel in die Aufnahme des Kapselhalters erlaubt.

8. Vorrichtung und Kapsel nach einem der drei vorangehenden Ansprüche, **dadurch gekennzeichnet, dass** der Auswurfmechanismus der Kapsel einen Nocken (54) umfasst, der den Zugstab beansprucht, wenn sich der Injektionskopf seiner geöffneten Stellung nähert, um den Zugstab vom Injektionskopf freizusetzen.

9. Vorrichtung und Kapsel nach einem der Ansprüche 1 bis 4, **dadurch gekennzeichnet, dass** der Kapselhalter im Verhältnis zum Körper (6) des Extraktionsblocks (4) schwenkbar montiert ist, wobei der Kapselhalter von einer Extraktionsstellung in eine Auswurfstellung der Kapsel schwenkbar ist, wobei die Vorrichtung ferner einen Auswurfmechanismus der Kapsel umfasst, der eine Schiene umfasst, die konfiguriert ist, um einen unteren Rand der Kapsel zu halten, wenn der Kapselhalter von seiner Extraktionsstellung in seine Auswurfstellung geschwenkt wird.

10. Vorrichtung und Kapsel nach vorangehendem Anspruch, **dadurch gekennzeichnet, dass** die Schiene eine Form hat, die derart ist, dass der Abstand zwischen der Schiene und der Schwenkachse des Kapselhalters von der Extraktionsstellung zur Auswurfstellung zunimmt.

11. Vorrichtung und Kapsel nach Anspruch 5 oder 6, **dadurch gekennzeichnet, dass** die Schiene eine gekrümmte und glatte Form hat.

12. Vorrichtung und Kapsel nach einem der vorangehenden Ansprüche, **dadurch gekennzeichnet, dass** die Kapsel eine Gewichtsverteilung hat, die derart ist, dass das Schwerkraftzentrum G im unteren Teil der Kapsel ist.

13. Vorrichtung und Kapsel nach einem der vorangehenden Ansprüche, **dadurch gekennzeichnet, dass** die Kapsel nur teilweise in einer Höhe unter 90 % des Gesamtvolumens des Kapselinnern gefüllt ist.

14. Vorrichtung und Kapsel nach einem der vorangehenden Ansprüche, **dadurch gekennzeichnet, dass** die Kombination des Neigungswinkels (α) des Kanals, des Gewichts, der Form der Kapsel und des Reibungskoeffizienten der Kapsel am Kanal konfiguriert ist, um eine Spitzengeschwindigkeit der Kapsel zwischen 0,5 ms⁻¹ und 3,0 ms⁻¹, vorzugsweise zwischen 1,0 ms⁻¹ und 2,0 ms⁻¹, unmittelbar in dem Moment sicherzustellen, bevor sie gegen die Seitenwand der Aufnahme des Kapselhalters prallt.

15. Vorrichtung nach einem der Ansprüche 9 bis 11, **dadurch gekennzeichnet, dass** die Schiene zwei Schienenabschnitte (60a, 60b) umfasst, die auf der einen und der anderen Seite der Aufnahme (18) des Kapselhalters angeordnet sind.

16. Vorrichtung und Kapsel nach einem der Ansprüche 9 bis 12, **dadurch gekennzeichnet, dass** der Kapselhalter einen Rand (35') mit hohlen Abschnitten (35a, 35b) umfasst, die sich unter den Auswurfschienen positionieren, wenn der Kapselhalter in der hohen Stellung ist.

## Claims

1. An appliance and container for preparing a beverage or a liquid food, the container (3) containing a substance to be extracted by introducing pressurized water into the container, the appliance comprising an extraction block (4) with an insertion channel (14) for the container, a container holder (8) with a recess, an extraction wall (22), a sidewall (20), an injection head (10) for injecting water into the container and an opening and closing mechanism (12) for accomplishing a relative motion between the container holder and the injection head for opening and closing the injection head at the container holder, the insertion channel being tilted at an angle (α) between 30 and 70 degrees with respect to a horizontal plane (HZ), **characterized in that** the angle (γ) between a portion of the sidewall (20) of the container holder remote from the insertion channel and the horizontal plane (HZ) is between 55 and 25 degrees and **in that** the opening and closing mechanism of the injection head comprises at least two articulated arms or pairs of arms, a first (36a) being pivotably mounted on the body (6) of the extraction block and the other (36b) pivotably mounted on the injection head, the first articulated arm having a shorter length than the second articulated arm.

2. The appliance and container according to Claim 1, **characterized in that** the insertion channel is tilted at an angle between 40 and 50 degrees with respect to the horizontal plane, and the average angle between the sidewall and the horizontal plane is between 50 and 40 degrees.

3. The appliance and container according to Claim 1 or 2, **characterized in that** the extraction block comprises an ejection opening (16) for the container oriented at a lateral angle β between 20 and 60 degrees, with respect to a vertical plane (PV) through an axis (IN) of the insertion channel.

4. The appliance and container according to the foregoing claim, **characterized in that** the lateral angle β is between 30 and 50 degrees.

5. The appliance and container according to any one of the foregoing claims, **characterized in that** it comprises an ejection mechanism (24) for the capsule comprising a ram (42) configured to engage with the underside of the flange of the container when the injection head is raised to the open position.

6. The appliance and container according to the foregoing claim, **characterized in that** the container ejection mechanism comprises a tie rod (44) or portion of a tie rod joined to the ram and comprising a hook (48) configured to engage with a shoulder or hook (50) of the injection head when it is raised.

7. The appliance and container according to any one of the two foregoing claims, **characterized in that** the ejection mechanism comprises a return spring (46) pushing the ram (42) into a retracted position allowing the insertion of a container into the recess of the container holder.

8. The appliance and container according to any one of the three foregoing claims, **characterized in that** the container ejection mechanism comprises a cam (54) engaging with the tire rod when the injection head approaches its open position in order to free the tie rod from the injection head.

9. The appliance and container according to any one of Claims 1 through 4, **characterized in that** the container holder is mounted pivotably with respect to the body (6) of the extraction block (4), the container holder being pivotable from an extraction position to a container ejection position, the appliance also comprising a container ejection mechanism comprising a rail configured to support the lower rim of the container when the container holder is pivoted from its extraction position to its ejection position.

10. The appliance and container according to the foregoing claim, **characterized in that** the rail has a shape such that the distance between the rail and the pivot axis of the container holder increases from the extraction position to the ejection position.

11. The appliance and container according to Claim 5 or 6, **characterized in that** the rail has a curved, smooth shape.

12. The appliance and container according to one of the foregoing claims, **characterized in that** the container has a weight distribution such that the center of gravity G is in the lower portion of the container.

13. The appliance and container according to one of the foregoing claims, **characterized in that** the container is only partially filled to a level of less than 90% of the total volume of the interior of the container.

14. The appliance and container according to one of the foregoing claims, **characterized in that** the combination of the angle of inclination (α) of the channel, the weight, the shape of the container and the coefficient of friction of the capsule against the channel is configured to ensure a peak speed of the container, at the moment just prior to striking the lateral wall of the recess of the container holder, of between 0.5ms⁻¹ and 3.0ms⁻¹, preferably between 1.0ms⁻¹ and 2.0ms⁻¹.

15. The appliance and container according to one of Claims 9 through 11, **characterized in that** the rail comprises two rail portions (60a, 60b) arranged on either side of the recess (18) of the container holder.

16. The appliance and container according to one of Claims 9 through 12, **characterized in that** the container holder comprises a rim (35') with hollow portions (35a, 35b) which are positioned under the discharge rails when the container holder is in the high position.
